# EUROPEAN PATENT SPECIFICATION

(11) **EP 1 718 695 B1**
(45) Date of publication and mention of the grant of the patent: **13.06.2007**
(21) Application number: 05702453.1
(22) Date of filing: 04.02.2005
(51) Int. Cl.: C08K 3/22, C08K 5/098, C08L 23/02, C08K 3/18

(54) **POLYOLEFIN COMPOSITIONS COMPRISING HYDRATED INORGANIC OR ORGANIC COMPOUNDS FOR THE PREVENTION OF DISCOLORATION**
POLYOLEFINZUSAMMENSETZUNGEN MIT HYDRATISIERTEN ANORGANISCHEN ODER ORGANISCHEN VERBINDUNGEN ZUR VERHINDERUNG VON VERFÄRBUNG
COMPOSES INORGANIQUES HYDRATES OU ORGANIQUES HYDRATES COMME AGENTS POUR LA PREVENTION DE LA DECOLORATION DE POLYOLEFINES

(30) Priority: 17.02.2004 EP 04003489; 22.04.2004 EP 04009516
(43) Date of publication of application: 08.11.2006
(73) Proprietor: Clariant Finance (BVI) Limited, Road Town, Tortola (VG)
(72) Inventor: KRÖHNKE, Christoph, 79206 Breisach-Oberrimsingen (DE); MALIK, Jan, F-68300 St. Louis (FR); STANIEK, Peter, 79589 Binzen (DE); BERENDSEN, Gert, NL-4553 DB Philippine (NL); LEE, Robin J, Lake Jackson, TX 77566 (US); HO, Thoi H, Lake Jackson, TX 77566 (US)
(74) Representative: Herrmann, Jörg
(86) International application number: PCT/IB2005/000311
(87) International publication number: WO 2005/082989

(56) References cited:
- GB-A- 1 080 619
- US-A- 3 168 505
- US-A- 4 284 762
- US-A- 4 594 382
- DATABASE WPI Section Ch, Week 197722 Derwent Publications Ltd., London, GB; Class A17, AN 1977-38833Y XP002284806 -& JP 52 049258 A (MITSUBISHI PETROCHEMICAL CO LTD) 20 April 1977 (1977-04-20) cited in the application

## Description

The invention relates to a polyolefin composition comprising a water releasing additive comprising hydrated inorganic or organic compounds as well as to a process for prevention of discoloration in polyolefins.

Discoloration of polyolefins either directly after manufacture or after processing is a well known phenomenon. Discoloration in polyolefins can be caused by various reasons. On a longer time scale, usually during the lifetime of the polyolefin article, discoloration occurs due to the transformation of phenol based antioxidants into products with quinoid structures (P.P Klemchuk and P.L.Horng, Polym.Degrad. Stab. 7, 131 (1984); T.J Henman in " Development in Polymer Stabilization-1, editor G.Scott, Applied Science Publishers, London, p.39 (1979); G.Scott and F.Yusoff, Polym.Degrad. Stab. 3, 13 (1980)). As a consequence, in subsequent publications (e.g. E.Epacher, E.Fekete, M.Gahleitner and B.Pukanszky, Polym.Degrad. Stab. 63, 489 (1999)) it is assumed that discoloration is proportional to the amount of stabilizer which reacts during the processing of the polyolefin which has been treated quantitatively.

In other literature, it is reported that discoloration of polyolefins is particularly pronounced if they are in continuous contact with water (H.R.Smeltz and W.Krucker, Textilveredlung, 20[9], 272 (1985)). Meanwhile, several stabilizer systems have been developed against the auto-oxidation process that can occur in the presence of transition metal ions e.g. from metal cable components.

Hydroperoxide decomposition, which may be involved in such auto-oxidation, is known to be catalyzed by transition metal impurities, usually metal catalyst residues such as titanium and aluminum residues left from the polymerization (Y.Kamiya, J.Polym. Sci., B-4, 999 (1966), R.Hiatt, T.Mill and F.R.Mayo, J.Org. Chem., 33, 1416 (1968); L.Reich, B.R.Jadrnicek, and S.S.Stivala, Polym. Eng. Sci., 11, 265 (1971); D.J.Carlson and D.M.Wiles, J. Macromol. Sci., Rev. Macromol. Chem., C-14, 65 (1976)).

In classical Ziegler based catalyst compositions, titanium and aluminum can be neutralized by adding water and / or alcohols to the system to form hydroxide or alkoxide derivatives, e.g. aluminum and titanium isopropoxides which during processing convert to the corresponding oxides of titanium and aluminum, or in the form of nanometer sized particles embedded within the particles of the resulting resin.

With later generation catalysts and corresponding polyolefins, Lewis acid residues in combination with residues of selectivity control agents can still lead to discoloration.

WO 99/67322 (EP-A-1090065) discloses foamable thermoplastic polyolefin elastomer compositions containing hydrated salts of Group 1 and 2 metals, especially metal hydroxides. Similarly, WO 98/37131 (EP-A-0961808) describes foamable polyolefin elastomer compositions comprising hydrated metal salts, especially aluminum and magnesium hydroxides which may be surface treated with coupling agents.

US 4,298,509 discloses fire resistant polyolefin fibers containing metal oxide hydrates together with halogenated organic compounds, ammonium-polyphosphates or metal borates. Similar additives for polyolefin resins include hydrotalcite or synthetic hydrotalcite [Mg₆Al₂(OH)₁₆](CO₃)(H₂O)₄, which generate carbon dioxide upon heating.

Porous laminated polyolefin sheets prepared by processing resins which contain up to 10 percent by weight of hydrated inorganic compounds, especially aluminum hydroxide and calcium carbonate are disclosed in JP-A-52/078279.

In JP-B-45/035372, polyethylene films are prepared from polymers containing hydrated salts, such as ferric ammonium alum. Such compounds however are pink or violet colored and accordingly of limited usefulness in polymer modification.

Despite the advances in the art occasioned by the foregoing polymer compositions, simple procedures to reduce or eliminate color formation in olefin polymers are still desired. In particular, a suitable process that utilize small quantities of colorless compounds that may be readily employed in polyolefin resins made via solution polymerization techniques is still desired.

JP-A-52/049258 (Mitsubishi Perochemical Co Ltd.) discloses a rust preventing anti yellowing Ziegler type polyolefin composition comprising 0.1 to 1 percent by weight of hydrated alkaline earth metal carbonate and/or hydroxide compounds as well as hydrated Mg/Al carbonate and/or hydroxide compounds, preferably hydrated Mg carbonate and/or hydroxide compounds.

US 4,591,633 (Suzuki et al.) discloses a deodorizing Ziegler type polyolefin composition comprising 0.001 to 0.5 percent by weight of hydrated Mg or Mg/Al carbonate and/or hydroxide compounds or hydrated Ca-/Al-/Si-oxide compounds.

US 4,284,762 (Miyata et al.) discloses a corrosion inhibiting, discoloration preventing polyolefin composition comprising 0.01 to 5 percent by weight of a hydrotalcite, preferably Mg₁₋ₓAlₓ(OH)₂(CO₃)_{x/n}ⁿ⁻¹ • m H₂O.

Surprisingly it now has been found that specific hydrated inorganic or organic compounds are suitable as water releasing additives preventing or reducing color body formation in polyolefins.

The polyolefin composition according to the invention comprises colorless water releasing additives in concentrations from 0.01 to 0.07 weight percent, based on the weight of the polyolefin mass, wherein the water releasing additive is selected from K₂HPO₄•3H₂O, K₄P₂O₇•3H₂O, NaH₂PO₄•H₂O, NaH₂PO₄•2H₂O, Na₂HPO₄•2(H₂O), Na₂HPO₄•12H₂O, Na₂HPO₄•7H₂O, Na₃PO₄•12H₂O, Na₄P₂O₇•12H₂O, Na₂HPO₄•5H₂O.

The polyolefin composition according to the invention comprises a polyolefin and from 0.01 to 0.07 percent by weight of the colorless, hydrated inorganic compound as a water releasing additive homogeneously incorporated therein.

Colorless in terms of the invention is defined as having a whiteness index (WI, determined according to ASTM-E-313.00) in the solid particulated form from 70 to 100, preferably from 80 to 100.

The water releasing additives are further capable of forming an aqueous solution at 25°C having a pH of from 2.0 to 10.0, preferably from 3.0 to 8.0. It is desirable that the composition does not evolve gaseous by-products, especially CO₂ upon melt processing thereof.

The polyolefins which are used as substrates according to the invention can be:
1. Polymers of mono- and diolefins, for example polypropylene, polyisobutylene, polybut-1-ene, poly-4-methylpent-1-ene, polyisoprene or polybutadiene and polymers of cycloolefins such as cyclopentene or norbornene; in addition polyethylene (which may optionally be crosslinked), e.g. high-density polyethylene (HDPE), low-density polyethylene (LDPE), linear low-density polyethylene (LLDPE), branched low-density polyethylene (BLDPE). Polyolefins, i.e. polymers of monoolefins, in particular polyethylene and polypropylene, can be prepared by various processes, especially by the following methods:
   a) free-radical (usually at high pressure and high temperature).
   b) by means of a catalyst, where the catalyst usually comprises one or more metals of groups IVb, Vb, Vlb or VIII. These metals usually have one or more ligands such as oxides, halides, alkoxides, esters, ethers, amines, alkyls, alkenyls and/or aryls, which can be either -π- or α-coordinated. These metal complexes can be free or fixed to supports, such as on activated magnesium chloride, titanium chloride, aluminum oxide or silicon oxide. These catalysts can be soluble or insoluble in the polymerization medium. The catalysts can be active as such in the polymerization, or other activators can be used, for example metal alkyls, metal hydrides, metal alkylhalides, metal alkyloxides or metal alkyloxanes, the metals being elements of Groups Ia, IIa and/or IIIa. The activators can be modified, for example, with further ester, ether, amine or silyl ether groups. These catalyst systems are usually termed Phillips, Standard Oil Indiana, Ziegler (Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of mono- and diolefins with one another or with other vinyl monomers, for example ethylene-propylene copolymers, linear low-density polyethylene (LLDPE) and mixtures thereof with low-density polyethylene (LDPE), propylene-but-1-ene copolymers, propylene-isobutylene copolymers, ethylene-but-1-ene copolymers, ethylene-hexene copolymers, ethylene-methylpentene copolymers, ethylene-heptene copolymers, ethylene-octene copolymers, propylene-butadiene copolymers, iso-butylene and isoprene copolymers, ethylene-alkyl acrylate copolymers, ethylene-alkyl methacrylate copolymers, ethylene-vinyl acetate copolymers and their copolymers with carbon monoxide or ethylene-acrylic acid copolymers and their salts (ionomers), as well as terpolymers of ethylene with propylene and a diene such as hexadiene, dicyclopentadiene or ethylidene-norbornene; in addition mixtures of such copolymers with one another and with polymers mentioned under 1), for example polypropylene/ ethylene-propylene copolymers, LDPE-ethylene-vinyl acetate copolymers, LDPE/ethylene-acrylic acid copolymers, LLDPE/ethylene-vinyl acetate copolymers, LLDPE/ethylene-acrylic acid copolymers and alternating or random polyalkylene-carbon monoxide copolymers and mixtures thereof with other polymers, for example polyamides.

Besides the water releasing additives according to the invention the polyolefins can contain all kinds of known additives, for example antioxidants, UV absorbers and light stabilizers, metal deactivators, phosphites and phosphonites, peroxide scavengers, basic costabilizers, nucleating agents, fillers and reinforcing agents, as well as other additives such as plasticizers, lubricants, emulsifiers, pigments, optical brighteners, flameproofing agents, antistatics, blowing agents.

Specifically disclosed are calcium stearate, zinc stearate, synthetic hydrotalcite, in particular DHT4A, and mixtures thereof.

In a preferred aspect of the invention the polyolefin composition comprises a blend of a water releasing additive as defined above with calcium stearate or zinc stearate or DHT4A in a blend ratio from 10:90 to 90:10 by weight.

Any additional additives can be added to the polyolefins before, together with or after addition of the additives of the invention. These additional additives can be added as solids, in solution or melt as well as in the form of solid or liquid mixtures or masterbatches/concentrates.

Preferred combinations consist of polyolefins prepared with a titanium and magnesium containing Ziegler-Natta catalyst compositions. The Ti catalyst composition is preferably prepared by combining a hydrocarbon slurry of anhydrous magnesium dichloride, a hydrocarbon solution of ethylaluminum dichloride and a hydrocarbon solution of titanium tetraalkoxides, especially titanium tetra(isopropoxide) to yield a composition containing a magnesium concentration from 0.1 to 0.5 M, a molar ratio of Mg/Ti of 40/1 to 5/1, and a molar ratio of Ti/Al from 1/1 to 1/10. Activation of the compound is with an aluminum trialkyl compound, especially triethylaluminum.

The invention further relates to a process for the prevention of discoloration in polyolefins characterized by the addition of the hydrated inorganic as characterized in claim 1 to a polyolefine in concentrations from 0.01 to 0.07 weight percent, based on the weight of the polyolefin mass.

The hydrated organic or inorganic compound is preferably added to the polymer formed in a polymerization process prior to devolatilization and/or melt extrusion and/or pelletizing. For example, in a solution polymerization process it is conveniently added to the solution exiting the reactor, desirably in the form of a solution or suspension of the additive compound. Further, the compound or a solution thereof, or a suspension thereof, can be added to the slurry exiting a slurry polymerization process or to the polymer powder recovered from a gas-phase process.

The additive compound can also be incorporated into a molten polymer mass in the form of a concentrate or masterbatch, which can comprise one or more additional polymers.

The preferred process for incorporating is a melt mixing process.

Surprisingly, the water releasing compounds are effective at suppressing discoloration during melt extrusion at very low concentrations without adverse impact on various polymer properties or on stabilizers or other additives normally added to such polymers.

### The invention is now illustrated by the following examples:

### EXAMPLES

A high density polyethylene (HD 12450 N (available from The Dow Chemical Co.) is extruded multiple times. Polymer with and without powdered hydrated salt and a common stabilizer package comprising 0.02 wt-% Hostanox^{®} O 10, 0.025 wt-% Hostanox^{®} O 16, and 0.100 wt-% Hostanox^{®} PAR 24 (all available from Clariant) is first mixed (dry blended) then extruded in a pre-extrusion step at 210°C using a single screw extruder (screw diameter 25mm (UD=25), compression 1:3, screw speed 60 rpm, die diameter 4mm). Subsequent extrusions were then carried out using a single screw extruder at 240°C (screw diameter 20mm (UD=20), compression 1:3, screw speed 70rpm, die diameter 2mm). The extrudate is formed into compression molded test plates. A uniform quantity of titanium tetraisopropoxide (0.001 % based on polymer weight) is added to all formulations (except the base reference) to simulate titanium residues.

Color (yellowness index, YI) is measured for each formulation after the pre-extrusion, first, third, and fifth extrusions by means of a Minolta CM 3500d spectrocolorimeter. Results are contained in TABLE 1.

**TABLE 1**

| **Ex.** | **Formulation** | **YI (pre-extr.)** | **YI (1)** | **YI (3)** | **YI (5)** |
|---|---|---|---|---|---|
| A* | base reference | 0.45 | 5.51 | 8.03 | 10.31 |
| 1 | 0.037wg-% Na₄P₂O₇•10H₂O | - 0.18 | 5.24 | 6.56 | 8.73 |
| 2 | 0.016wg-% Na₂HPO₄•7H₂O | - 0.22 | 4.69 | 6.31 | 8.57 |
| 3 | 0.065wg-% Na₂HPO₄•7H₂O | - 0.55 | 4.95 | 6.90 | 8.22 |

| | | | | | |
|---|---|---|---|---|---|
| * comparative not an example of the invention | | | | | |

The test conditions of Examples 1-3 were substantially repeated with 0.003 weight percent titanium tetraisopropoxide instead of 0.001 weight percent titanium tetraisopropoxide added to each sample (except the base reference). Results are contained in TABLE 2.

**TABLE 2**

| **Ex.** | **Formulation** | **YI (pre-extr.)** | **YI (1)** | **YI (3)** | **YI (5)** |
|---|---|---|---|---|---|
| A* | base reference | 0.45 | 5.51 | 8.03 | 10.31 |
| 4 | 0.009wg-% Na₄P₂O₇ • 10H₂O | - 1.31 | 2.54 | 4.36 | 6.02 |
| 5 | 0.018wg-% Na₄P₂O₇ • 10H₂O | - 2.02 | 2.15 | 4.67 | 5.84 |
| 6 | 0.004wg-% Na₂HPO₄ • 7H₂O | - 1.41 | 2.62 | 4.93 | 6.18 |
| 7 | 0.015wg-% Na₂HPO₄ • 7H₂O | - 1.79 | 2.55 | 4.33 | 5.21 |

| | | | | | |
|---|---|---|---|---|---|
| * comparative, not an example of the invention | | | | | |

## Claims

1. Polyolefin composition comprising a water releasing additives in concentrations from 0.01 to 0.07 weight percent, based on the weight of the polyolefin mass wherein the water releasing additive is selected from K₂HPO₄•3H₂O, K₄P₂O₇•3H₂O, NaH₂PO₄•H₂O, NaH₂PO₄•2H₂O, Na₂HPO₄•2(H₂O), Na₂HPO₄•12H₂O, Na₂HPO₄•7H₂O, Na₃PO₄•12H₂O, Na₄P₂O₇•12H₂O, Na₂HPO₄•5H₂O.

2. Polyolefin composition according to claim 1 wherein the additive is a blend of a water releasing additive according to claim 1 with calcium stearate or zinc stearate or DHT4A in a blend ratio from 10:90 to 90:10 by weight.

3. A process for the prevention of discoloration in polyolefins **characterized by** the addition of a water releasing additive as **characterized in** claims 1 to 2 to a polyolefine in concentrations from 0.01 to 0.07 weight percent, based on the weight of the polyolefin mass.

4. A process according to claim 3 wherein the water releasing additives are added to the polyolefin polymer formed in any polymerization process prior to devolatilization and/or melt extrusion and pelletizing thereof.

5. A process according to claim 3 wherein the water releasing additives are incorporated into the molten polymer mass by means of a melt mixing process, preferably in the form of a concentrate or masterbatch.

6. Use of polyolefin composition as **characterized in** claims 1 to 5 for the prevention of discoloration in polyolefins.

## Patentansprüche

1. Polyolefinzusammensetzung, enthaltend ein Wasser freisetzendes Additiv in Konzentrationen von 0,01 bis 0,07 Gewichtsprozent, bezogen auf das Gewicht der Polyolefinmasse, wobei das Wasser freisetzende Additiv ausgewählt ist aus K₂HPO₄·3H₂O, K₂P₂O₇·3H₂O, NaH₂PO₄·H₂O, NaH₂PO₄·2H₂O, Na₂HPO₄·2(H₂O), Na₂HPO₄·12H₂O, Na₂HPO₄·7H₂O, Na₃PO₄·12H₂O, Na₄P₂O₇·12H₂O, Na₂HPO₄·5H₂O.

2. Polyolefinzusammensetzung nach Anspruch 1, bei der als Additiv eine Mischung eines Wasser freisetzenden Additivs gemäss Anspruch 1 mit Calciumstearat oder Zinkstearat oder DHT4A in einem gewichtsbezogenen Mischungsverhältnis von 10:90 bis 90:10 enthalten ist.

3. Verfahren zur Verhinderung der Verfärbung bei Polyolefinen, **gekennzeichnet durch** den Zusatz eines Wasser freisetzenden Additivs gemäss den Ansprüchen 1 bis 2 zu einem Polyolefin in Konzentrationen von 0,01 bis 0,07 Gewichtsprozent, bezogen auf das Gewicht der Polyolefinmasse.

4. Verfahren nach Anspruch 3, bei dem man die Wasser freisetzenden Additive dem in einem beliebigen Polymerisationsverfahren gebildeten Polyolefinpolymer vor dessen Entflüchtung und/oder Schmelzextrusion und Granulierung zusetzt.

5. Verfahren nach Anspruch 3, bei dem man die Wasser freisetzenden Additive mittels eines Schmelzmischverfahrens, bevorzugt in Form eines Konzentrats oder als Masterbatch, in die aufgeschmolzene Polymermasse einarbeitet.

6. Verwendung einer Polyolefinzusammensetzung gemäss den Ansprüchen 1 bis 5 zur Verhinderung der Verfärbung bei Polyolefinen.

## Revendications

1. Composition de polyoléfine comprenant un additif libérant de l'eau en des concentrations allant de 0,01 à 0,07 pourcent en poids, par rapport au poids de la masse polyoléfinique, l'additif libérant de l'eau étant choisi parmi K₂HPO₄·3H₂O, K₄P₂O₇·3H₂O, NaH₂PO₄·H₂O, NaH₂PO₄·2H₂O, Na₂HPO₄·2(H₂O), Na₂HPO₄·12H₂O, Na₂HPO₄·7H₂O, Na₃PO₄·12H₂O, Na₄P₂O₇·12H₂O, Na₂HPO₄·5H₂O.

2. Composition de polyoléfine selon la revendication 1, dans laquelle l'additif est un mélange constitué d'un additif libérant de l'eau selon la revendication 1 et de stéarate de calcium, de stéarate de zinc ou de DHT4A dans un rapport de mélange allant de 10:90 à 90:10 en poids.

3. Procédé prévenant la décoloration des polyoléfines consistant à ajouter un additif libérant de l'eau tel qu'il est **caractérisé** dans les revendications 1 et 2 à une polyoléfine en des concentrations allant de 0,01 à 0,07 pourcent en poids, par rapport au poids de la masse polyoléfinique.

4. Procédé selon la revendication 3, dans lequel les additifs libérant de l'eau sont ajoutés au polymère de polyoléfine formé dans un quelconque procédé de polymérisation avant la dévolatilisation et/ou l'extrusion à l'état fondu et la pelletisation de ce polymère.

5. Procédé selon la revendication 3, dans lequel les additifs libérant de l'eau sont incorporés à la masse polymérique fondue au moyen d'un procédé de mélangeage à l'état fondu, de préférence sous forme d'un concentré ou de matière brute.

6. Utilisation de la composition de polyoléfine telle qu'elle est **caractérisée** dans les revendications 1 à 5 pour prévenir la décoloration des polyoléfines.
